# EUROPÄISCHE PATENTSCHRIFT

(11) **EP 1 445 053 B1**
(45) Veröffentlichungstag und Bekanntmachung des Hinweises auf die Patenterteilung: **09.05.2007**
(21) Anmeldenummer: 03002405.3
(22) Anmeldetag: 04.02.2003
(51) Int. Cl.: B23D 31/00

(54) **Verfahren und Vorrichtung zum Brechen von scheiben- oder plattenartigen Werkstücken**
Method and device for fracturing flat or disc-like workpieces
Procédé et dispositif pour diviser par rupture des pièces plattes ou en forme de disques

(43) Veröffentlichungstag der Anmeldung: 11.08.2004
(73) Patentinhaber: Alfing Kessler Sondermaschinen GmbH, 73433 Aalen (DE)
(72) Erfinder: Wisniewski, Horst, 73433 Aalen (DE)
(74) Vertreter: HOFFMANN EITLE

(56) Entgegenhaltungen:
- CA-C- 2 287 140
- DE-A- 3 802 141
- DE-A- 4 406 981
- US-A- 5 218 762
- US-A1- 2002 162 205

## Beschreibung

Die vorliegende Erfindung betrifft ein Verfahren zum Bruchtrennen von Pleueln, Lagerböcken, Hülsen und Ringen, insbesondere Bremsscheiben nach dem Oberbegriff des Anspruchs 1. sowie eine Vorrichtung zur Durchführung des Verfahrens nach dem Oberbegriff des Anspruchs 1. Ein solches Verfahren bzw. eine solche Vorrichtung ist aus CA 2 287 140C bekannt.

Einstückig hergestellte Werkstücke durch sogenanntes "Bruchtrennen" in einer vorgegebenen Ebene aufzutrennen und auf diese Weise eine aufwendige spangebende Bearbeitung zu vermeiden, ist seit langem bekannt.

In der Hauptsache wurde die Bearbeitung durch Bruchtrennen bisher jedoch nur bei solchen Werkstücken realisiert, bei denen konstruktionsbedingt eine Bohrung im Werkstück zur Verfügung stand, über deren Innenfläche eine im wesentlichen radial nach außen gerichtete Bruchtrennkraft eingeleitet werden konnte. Beispiele für diese Art von Bearbeitung stellen das Brechen von Pleueln und Lagerböcken (vgl. beispielsweise US-PS 4,569,109 oder CA 2 287 140C) oder das Brechen von Hülsen oder Ringen (vgl. beispielsweise US-PS 1,440,559) dar.

Sofern beim Bruchtrennvorgang eine Verformung des Werkstückes in Kauf genommen werden konnte, wurde die Bruchtrennkraft auch über Spaltwerkzeuge in die Werkstücke eingeleitet (vgl. DE 27 23 928 bzw. US-PS 3,845,895).

Für den Fall, dass die Werkstücke aus sehr sprödem Material bestanden, wurden in Einzelfällen auch Quetschverfahren zum Bruchtrennen eingesetzt (vgl. beispielsweise DE-OS 31 36 247).

Zur Dauerfestigkeits- oder Zeitstandsprüfung wie Wechselbiegungs-, zug- oder Kombinationsbelastungsprüfung von elastischen Werkstoffen wie zum Beispiel Kunststoffolien, gummiartigen Werkstoffen oder auch dünnen metallischen Platten, sind spezielle Prüfverfahren bekannt (vergl. DE 38 02 141).

Aufgabe der vorliegenden Erfindung ist es, ein vollkommen neues zum Bruchtrennen von Pleueln, Lagerböcken, Hülsen und Ringen, insbesondere Bremsscheiben geeignetes Bearbeitungsverfahren sowie eine hierfür geeignete Vorrichtung zur Verfügung zu stellen, welches bzw. welche mit geringem technischen Aufwand auch bei komplizierterer Werkstückform ein ausbruchfreies Brechen ermöglicht.

Diese Aufgabe wird hinsichtlich des Verfahrens erfindungsgemäß dadurch gelöst, dass das jeweilige Werkstück zu beiden Seiten der Bruchebene jeweils zwischen Spannbackenpaaren eingespannt wird und die Spannbackenpaare unter Krafteinwirkung derart zueinander bewegt werden, dass das Werkstück entlang der Bruchebene abwechselnd auf der Ober- und der Unterseite einer Zugspannung ausgesetzt wird.

Die gestellte Aufgabe wird darüber hinaus mit einer Vorrichtung zur Durchführung des Verfahrens gelöst, die mit den Merkmalen des Patentanspruches 21 ausgestattet ist.

Der Erfindung liegt der Gedanke zugrunde, die Schädigung des Materials im Bruchbereich nicht - wie bei der überwiegenden Anzahl der bekannten Verfahren - schlagartig durchzuführen, sondern die hierfür notwendigen Kräfte in Form einer Wechselbeanspruchung in die maßgeblichen Bereiche des Werkstückes einwirken zu lassen. Vereinfacht ausgedrückt: Das Gefüge des Materials soll nicht schlagartig zerstört, sondern durch eine Wechselbelastung im maßgeblichen Bereich langsam "zermürbt" werden, wie dies bei Prüfverfahren bereits realisiert wird.

Die Wechselbelastung im maßgeblichen Bereich des Werkstückes und die damit verbundene Zugspannung auf der Ober- bzw. Unterseite der Werkstücke kann in verschiedenster Weise erzeugt werden. Eine besonders einfache Verfahrensweise besteht darin, dass die Spannbackenpaare in eine periodisch wechselnde Kippbewegung versetzt werden.

Um den Einfluss der Wechselbelastung auf die maßgeblichen Bereiche des Werkstückes zu erhöhen, kann es zweckmäßig sein, die periodisch wechselnde Kippbewegung der Spannbackenpaare zueinander mit einer Zugkraft zu überlagern, die die Backenpaare im wesentlichen senkrecht zur Bruchebene auseinanderzieht.

Eine besonders wirkungsvolle Bearbeitung des Materials im obigen Sinne wird dadurch erreicht, dass die durch die periodisch wechselnde Kippbewegung der Spannbackenpaare im Bereich der Bruchebene des Werkstückes erzeugte Biegewechselspannung kontinuierlich ansteigend eingeleitet wird.

Besonders zweckmäßig ist es dabei, die erzeugte Biegewechselspannung pulsierend einzuleiten.

Im Falle der Überlagerung mittels einer Zugkraft ist es vorteilhaft, wenn die Zugkraft kontinuierlich gesteigert wird. Auch kann die Zugkraft im Bedarfsfalle in vorteilhafter Weise pulsierend eingeleitet werden.

Versuche haben ergeben, dass es zweckmäßig ist, die Frequenz der periodisch wechselnden Kippbewegung der Spannbackenpaare in einem Bereich zwischen 0,1 und 10 Hz anzusiedeln.

Grundsätzlich ist es möglich, die Kräfte für die Kippbewegung der Spannbackenpaare und der Zugkraft in jeder beliebigen Weise zu erzeugen. Eine vorteilhafte Ausgestaltung ergibt sich jedoch, wenn die Krafteinwirkung für die Bewegung und/oder die Zugkraft auf hydraulischem Weg erzeugt wird.

Die Bewegung der Backenpaare zueinander kann dadurch realisiert werden, daß - in bezug auf eine feste Basis - ein Backenpaar unbeweglich und das andere Backenpaar beweglich angeordnet wird.

Bei der Bearbeitung durch Bruchtrennen ist es bekannt und gebräuchlich, den Bruchtrennvorgang durch die Anordnung einer Bruchkerbe zu erleichtern und auch in seiner Lage und Richtung zu beeinflussen. Im Zusammenhang mit der erfindungsgemäßen Verfahrensweise ist es deshalb zweckmäßig, das Werkstück auf der Ober- und/oder der Unterseite im Bereich der Bruchebene mit einer derartigen Bruchkerbe auszustatten.

Je nach Anwendungsbereich und Werkstückkonfiguration kann es zweckmäßig sein, der Bruchkerbe einen bestimmten Verlauf zu geben. So kann es bei scheibenförmigen Werkstücken vorteilhaft sein, dass die Bruchkerbe gegenüber dem Radius einen Winkel einschließt. Eine derartige Anordnung eignet sich insbesondere zum Bruchtrennen von Bremsscheiben, für die sich das erfindungsgemäße Verfahren in besonderer Weise eignet.

Vorteilhaft ist es, dass dieser Winkel zwischen 5° und 30° beträgt. Im Falle von scheibenförmigen Werkstücken in Form von Bremsscheiben ist es zweckmäßig, dass die Bruchkerbe auf der Oberseite gegenüber der Bruchkerbe auf der Unterseite der Scheibe versetzt angeordnet wird.

Gute, ausbruchsfreie Bruchergebnisse werden stets dann erzielt, wenn die Spannbackenpaare jeweils derart angeordnet werden, dass sie mit ihren freien Enden von einander gegenüberliegenden Seiten bis an die Bruchebene heranreichen.

Für bestimmte Werkstückkonfigurationen kann es zweckmäßig sein, dass die Bruchkerben von Schneiden erzeugt werden, die im Bereich der freien Enden der Backen eines der beiden Backenpaare angeordnet sind, d.h. also in diese integriert sind.

Für den Fall, dass scheibenförmige Werkstücke gebrochen werden sollen, deren Bruchebene einen Winkel gegenüber dem Radius des Werkstückes einschließen soll, ist es vorteilhaft, dass auch die zum Kerben vorgesehenen Schneiden gegenüber dem Radius des scheibenförmigen Werkstückes einen Winkel einschließen. Auch in einem solchen Fall ist die Wahl eines Winkels zwischen 5° und 30° vorteilhaft.

Eine entsprechende Vorrichtung zur Durchführung des Verfahrens, welche mit einer Basis ausgestattet ist, kann gemäß Patentanspruch 21 mit einem fest und einem beweglich auf der Basis angeordneten Backenpaar ausgestattet sein. Erfindungsgemäß wird dabei ein Antrieb vorgesehen, der jeweils auf die beweglichen Backenpaare einwirkt und diese periodisch hin- und herbewegt. Ferner ist erfindungsgemäß eine Steuereinheit vorgesehen, mit der die Hin- und Herbewegung des beweglichen Backenpaares nach Frequenz und Kraft einstellbar ist.

Grundsätzlich kann der Antrieb für die beweglich angeordneten Backenpaare in jeder beliebigen Weise ausgestaltet sein. Besonders vorteilhaft ist es jedoch, wenn der Antrieb ein Hydraulikaggregat mit mindestens einer Pumpe, mindestens einer Ventilanordnung sowie mindestens einem Arbeitszylinder aufweist, der bzw. die auf das eine oder die beiden Backenpaare einwirkt.

Vorteilhafterweise kann die Ventilanordnung dabei ein hydraulisches Proportional-, Servo- oder Schaltventil aufweisen. Darüber hinaus ist es zweckmäßig, wenn die Ventilanordnung ein steuerbares Druckminderventil besitzt.

Im folgenden ist zur weiteren Erläuterung und zum besseren Verständnis ein Ausführungsbeispiel einer erfindungsgemäßen Vorrichtung zur Durchführung des erfindungsgemäßen Verfahrens näher beschrieben und erläutert.
- Figur 1: zeigt schematisch eine Seitenansicht der erfindungsgemäßen Vorrichtung mit einem Antrieb und einem Schaltschema für ein mit dem Antrieb verbundenes Hydraulikaggregat, und
- Figur 2: zeigt eine Draufsicht auf die Vorrichtung gemäß Figur 1, jedoch ohne das Schaltschema.

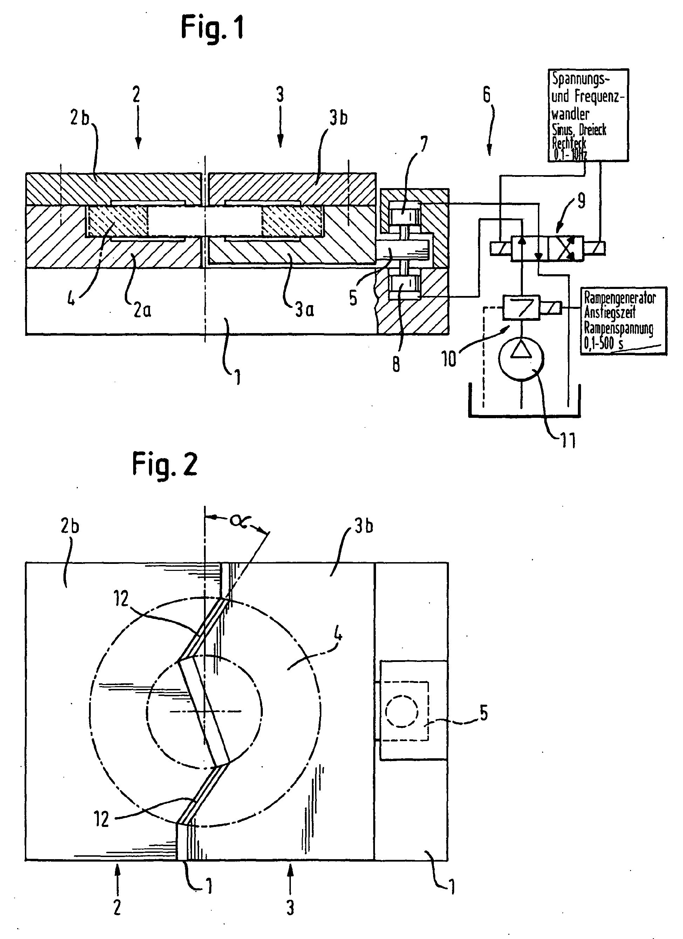

Die Figuren 1 und 2 zeigen eine Vorrichtungsvariante, bei der auf einer Basis 1 ein festes Backenpaar 2 und ein bewegliches Backenpaar 3 montiert sind.

Das fest auf der Basis 1 montierte Backenpaar 2 umfasst eine untere Backe 2a und eine obere Backe 2b.

In gleicher Weise ist das beweglich auf der Basis montierte Backenpaar 3 ausgebildet, das ebenfalls eine untere Backe 3a und eine obere Backe 3b besitzt.

Die obere Backe 2b und die obere Backe 3b können jeweils von der unteren Backe 2a bzw. 3a abgehoben werden, damit ein Werkstück 4 zwischen die Backen eingelegt werden kann.

Im vorliegenden Fall ist das Werkstück eine Bremsscheibe, die durch Bruchtrennen in zwei Teile aufgetrennt werden soll.

Nach dem Einlegen des Werkstückes 4 kann die obere Backe 2b bzw. 3b jeweils mit ihrer unteren Backe 2a bzw. 3a in herkömmlicher Weise fest verbunden und auf diese Weise das Werkstück 4 zwischen den Backen fest eingespannt werden.

Die untere Backe 3a des beweglichen Backenpaares 3 ist im vorliegenden Ausführungsbeispiel über einen Hebelarm 5 mit einem Antrieb 6 verbunden.

Wie aus Figur 1 schematisch hervorgeht, besitzt der Antrieb 6 zwei fest mit der Basis verbundene Hydraulikzylinder 7 und 8, wobei der Hydraulikzylinder 7 mit seiner Kolbenstange auf die Oberseite und der Hydraulikzylinder 8 mit seiner Kolbenstange auf die Unterseite des Hebelarmes 5 einwirkt.

Wie aus Figur 1 ferner erkennbar, sind die Hydraulikzylinder 7 und 8 als einfach wirkende Zylinder ausgebildet. Selbstverständlich kann anstelle von zwei einfach wirkenden Hydraulikzylindern auch ein einziger doppelt wirkender Hydraulikzylinder eingesetzt werden. Wesentlich ist lediglich, dass eine Anordnung gewählt wird, bei der der Hebelarm 5 periodisch auf- und ab bewegt werden kann.

Bei dem in Figur 1 dargestellten Ausführungsbeispiel sind die Zylinderräume der einfach wirkenden Hydraulikzylinder 7 und 8 über Leitungen mit einem Ventil 9 verbunden. Dieses Ventil kann als Proportional-Servo- oder Schaltventil ausgestaltet sein. Wesentlich ist lediglich, dass die Hydraulikzylinder 7 und 8 abwechselnd mit Hydraulikflüssigkeit beaufschlagt werden, d.h. der Hebelarm 5 eine pulsierende Auf- und Abwärtsbewegung ausführt.

Das Ventil 9 ist mit einem steuerbaren Druckminderventil 10 verbunden, welches seinerseits von einer Hydraulikpumpe 11 gespeist wird.

Das Druckminderventil 10 wird seinerseits von einem sogenannten Rampengenerator gesteuert, mit dem die Anstiegszeit für das Druckminderventil 10 den jeweiligen Bruchbedingungen entsprechend eingestellt werden kann.

Der oben beschriebene Antrieb 6 für den Hebelarm 5 kann auch in anderer Weise ausgestaltet sein. Wesentlich ist lediglich, dass der Hebelarm 5 mit einer entsprechenden Kraft und einer vorgegebenen Frequenz auf- und ab bewegt werden kann. Wie bereits beschrieben, können die Kräfte im Bedarfsfalle auch ansteigend oder pulsierend eingeleitet werden.

An den Hebelarm 5 kann auch ein weiterer Zylinder (nicht dargestellt) mit horizontaler Wirkungsrichtung angreifen und auf diese Weise die durch die Hydraulikzylinder 7 und 8 erzeugte Kippbewegung durch eine Zugkraft überlagert werden, die die Backenpaare im wesentlichen senkrecht zur Bruchebene auseinander zieht.

Wie aus Figur 2 hervorgeht, soll das Werkstück 4 in Form einer Bremsscheibe im vorliegenden Ausführungsbeispiel nicht radial gebrochen werden. Die vorgegebene Bruchebene soll vielmehr in einem Winkel α zum Radius geneigt sein.

Um einen derartigen Bruch realisieren zu können, sind - wie Figur 2 zeigt - die Backen der Spannbackenpaare 2 und 3 im Bereich ihrer einander zugewandten Vorderseite ebenfalls in einem Winkel α geneigt zueinander ausgebildet.

Im vorliegenden Ausführungsbeispiel ist das Werkstück 4 sowohl auf seiner Ober- als auch auf seiner Unterseite im Bereich der Bruchebene mit einer Bruchkerbe ausgestaltet, die schematisch in Figur 2 als Strich angedeutet ist, der zwischen den einander zugewandten Vorderkanten der Spannbacken angeordnet ist.

## Patentansprüche

1. Verfahren zum Bruchtrennen von Pleueln Lagerböcken, Hülsen und Ringen, insbesondere Bremsscheiben entlang einer vorgegebenen Bruchebene (12), wobei das jeweilige Werkstück (4) zu beiden Seiten der Bruchebene jeweils zwischen Spannbackenpaaren (2, 3) eingespannt wird und die Spannbackenpaare (2, 3) unter Krafteinwirkung derart zueinander bewegt werden, und **dadurch gekennzeichnet ist,dass** das Werkstück entlang der Bruchebene abwechselnd auf der Ober- und der Unterseite einer Zugspannung ausgesetzt wird.

2. Verfahren nach Anspruch 1, **dadurch gekennzeichnet, dass** die Zugspannung durch eine periodisch wechselnde Kippbewegung der Spannbackenpaare (2, 3) zueinander erzeugt wird.

3. Verfahren nach Anspruch 2, **dadurch gekennzeichnet, dass** die periodisch wechselnde Kippbewegung der Spannbackenpaare von einer Zugkraft überlagert wird, die die Backenpaare (2,3) im wesentlichen senkrecht zur Bruchebene (12) auseinanderzieht.

4. Verfahren nach Anspruch 2, **dadurch gekennzeichnet, dass** die durch die periodisch wechselnde Kippbewegung der Spannbackenpaare (2, 3) im Bereich der Bruchebene (12) des Werkstückes erzeugte Biegewechselspannung kontinuierlich ansteigend eingeleitet wird.

5. Verfahren nach Anspruch 2, **dadurch gekennzeichnet, dass** die durch die periodisch wechselnde Kippbewegung der Spannbackenpaare (2, 3) im Bereich der Bruchebene des Werkstückes erzeugte Biegewechselspannung pulsierend eingeleitet wird.

6. Verfahren nach Anspruch 3, **dadurch gekennzeichnet, dass** die Zugkraft kontinuierlich gesteigert wird.

7. Verfahren nach Anspruch 3, **dadurch gekennzeichnet, dass** die Zugkraft pulsierend eingeleitet wird.

8. Verfahren nach Anspruch 1 oder 2, **dadurch gekennzeichnet, dass** die Frequenz der Bewegung zwischen 0,1 und 10 Hz liegt.

9. Verfahren nach Anspruch 7, **dadurch gekennzeichnet, dass** die Frequenz der Zugkraft zwischen 0,1 und 10 Hz liegt.

10. Verfahren nach einem oder mehreren der Ansprüche 1 bis 9, **dadurch gekennzeichnet, dass** die Krafteinwirkung für die Bewegung hydraulisch erzeugt wird.

11. Verfahren nach Anspruch 3, 6, 7 oder 9, **dadurch gekennzeichnet, dass** die Zugkraft hydraulisch erzeugt wird.

12. Verfahren nach einem oder mehreren der Ansprüche 1 bis 5 sowie 8 und 10, **dadurch gekennzeichnet, dass** zur Erzeugung der Bewegung in bezug auf eine feste Basis ein Backenpaar (2) feststeht und das andere Backenpaar (3) bewegt wird.

13. Verfahren nach Anspruch 1, **dadurch gekennzeichnet, dass** das Werkstück auf der Ober- und/oder der Unterseite im Bereich der Bruchebene (12) mit einer Bruchkerbe ausgestattet ist.

14. Verfahren nach Anspruch 13 zum Brechen eines scheibenförmigen Werkstückes (4) **dadurch gekennzeichnet, dass** die Bruchkerbe gegenüber dem Radius einen Winkels (α) einschließt.

15. Verfahren nach Anspruch 14, **dadurch gekennzeichnet, dass** der Winkel (α) zwischen 5° und 30° beträgt.

16. Verfahren nach Anspruch 13 oder 14, **dadurch gekennzeichnet, dass** die Bruchkerbe auf der Oberseite gegenüber der Bruchkerbe auf der Unterseite des Werkstückes (4) versetzt ist.

17. Verfahren nach Anspruch 1, **dadurch gekennzeichnet, dass** die Spannbackenpaare (2, 3) mit ihren freien Enden von einander gegenüberliegenden Seiten bis an die Bruchebene heranreichen.

18. Verfahren nach Anspruch 17, **dadurch gekennzeichnet, dass** die Bruchkerben von Schneiden erzeugt werden, die im Bereich der freien Enden der Backen eines der beiden Backenpaare (2, 3) angeordnet sind.

19. Verfahren nach Anspruch 18 zum Brechen eines scheibenförmigen Werkstückes (4) **dadurch gekennzeichnet, dass** die Schneiden gegenüber dem Radius des scheibenförmigen Werkstückes (4) einen Winkel (α) einschließen.

20. Verfahren nach Anspruch 19, **dadurch gekennzeichnet, dass** der Winkel (α) zwischen 5° und 30° beträgt.

21. Vorrichtung zur Durchführung des Verfahrens nach einem oder mehreren der vorhergehenden Ansprüche 1 bis 20,
- mit einer Basis (1),
- einem fest auf der Basis (1) montierten ersten Backenpaar (2),
- einem beweglich auf der Basis (1) angeordneten zweiten Backenpaar (3),
- einem Antrieb (6), mit dem das beweglich angeordnete zweite Backenpaar periodisch hin- und herbewegbar ist, sowie
- einer Steuereinheit, mit der die Hin- und Herbewegung des zweiten Backenpaares nach Frequenz und Kraft einstellbar ist.

22. Vorrichtung nach Anspruch 21, **dadurch gekennzeichnet, dass** der Antrieb (6) ein Hydraulikaggregat mit mindestens einer Pumpe (11), mindestens einer Ventilanordnung (9) sowie mindestens einem Arbeitszylinder (7, 8) aufweist, der bzw. die auf eines oder beide Backenpaare einwirken.

23. Vorrichtung nach Anspruch 22, **dadurch gekennzeichnet, dass** die Ventilanordnung (9) ein hydraulisches Proportional-, Servo- oder Schaltventil aufweist.

24. Vorrichtung nach Anspruch 22 oder 23, **dadurch gekennzeichnet, dass** die Ventilanordnung ein steuerbares Druckminderventil (11) aufweist.

## Claims

1. Method for fracture-separation of connecting rods, pillow blocks, sleeves and rings, in particular brake discs, along a preset fracture plane (12), the respective workpiece (4) being clamped on both sides of the fracture plane in each case between pairs of clamping jaws (2, 3) and the pairs of clamping jaws (2, 3) being moved towards one another under the action of force in such a way and is **characterised in that** [sic] the workpiece is exposed to tensile stress along the fracture plane alternately on the top and the bottom.

2. Method according to claim 1, **characterised in that** the tensile stress is generated by a periodically changing tilting movement of the pairs of clamping jaws (2, 3) towards one another.

3. Method according to claim 2, **characterised in that** the periodically changing tilting movement of the pairs of clamping jaws is superimposed by a tensile force, which pulls the pairs of clamping jaws (2, 3) apart substantially perpendicular to the fracture plane (12).

4. Method according to claim 2, **characterised in that** the fatigue limit tension generated by the periodically changing tilting movement of the pairs of clamping jaws (2, 3) in the area of the fracture plane (12) of the workpiece is initiated rising continuously.

5. Method according to claim 2, **characterised in that** the fatigue limit tension generated by the periodically changing tilting movement of the pairs of clamping jaws (2, 3) in the area of the fracture plane of the workpiece is initiated pulsatingly.

6. Method according to claim 3, **characterised in that** the tensile force is continuously increased.

7. Method according to claim 3, **characterised in that** the tensile force is initiated pulsatingly.

8. Method according to claim 1 or 2, **characterised in that** the frequency of the movement is between 0.1 and 10 Hz.

9. Method according to claim 7, **characterised in that** the frequency of the tensile force is between 0.1 and 10 Hz.

10. Method according to one or more of claims 1 to 9, **characterised in that** the action of force for the movement is hydraulically generated.

11. Method according to claim 3, 6, 7 or 9, **characterised in that** the tensile force is hydraulically generated.

12. Method according to one or more of claims 1 to 5 and 8 and 10, **characterised in that** to generate the movement in relation to a fixed base, one pair of jaws (2) is stationary and the other pair of jaws (3) is moved.

13. Method according to claim 1, **characterised in that** the workpiece is equipped with a fracture notch on the top and/or the bottom in the area of the fracture plane (12).

14. Method according to claim 13 for breaking a disc-shaped workpiece (4), **characterised in that** the fracture notch encloses an angle (α) in respect of the radius.

15. Method according to claim 14, **characterised in that** the angle (α) is between 5° and 30°.

16. Method according to claim 13 or 14, **characterised in that** the fracture notch on the top is offset in respect of the fracture notch on the bottom of the workpiece (4).

17. Method according to claim 1, **characterised in that** the pairs of clamping jaws (2, 3) reach as far as the fracture notch with their open ends on sides opposite one another.

18. Method according to claim 17, **characterised in that** the fracture notches are produced by cutting edges arranged in the area of the open ends of the jaws of one of the two pairs of jaws (2, 3).

19. Method according to claim 18 for breaking a disc-shaped workpiece (4), **characterised in that** the cutting edges enclose an angle (α) in respect of the radius of the disc-shaped workpiece (4).

20. Method according to claim 19, **characterised in that** the angle (α) is between 5° and 30°.

21. Device for carrying out the method according to one or more of preceding claims 1 to 20,
- with a base (1),
- a first pair of jaws (2) mounted rigidly on the base (1),
- a second pair of jaws (3) arranged as movable on the base (1),
- a drive (6), by which the second pair of jaws, arranged as movable, can be moved forwards and backwards periodically and
- a control unit by which the forward and backward movement of the second pair of jaws can be adjusted in frequency and force.

22. Device according to claim 21, **characterised in that** the drive (6) has a hydraulic aggregate with at least one pump (11), at least one valve arrangement (9) and at least one operating cylinder (7, 8), which acts/act on one or both pairs of jaws.

23. Device according to claim 22, **characterised in that** the valve arrangement (9) has a hydraulic proportional, servo or on-off valve.

24. Device according to claim 22 or 23, **characterised in that** the valve arrangement has a controllable pressure-reducing valve (11).

## Revendications

1. Procédé pour diviser par rupture des bielles, des supports de palier, des douilles et des bagues, en particulier des disques de frein le long d'un plan de rupture donné (12), la pièce respective (4) étant serrée des deux côtés du plan de rupture respectivement entre des paires de mâchoires de serrage (2, 3) et les paires de mâchoires de serrage (2, 3) étant déplacées l'une vers l'autre sous l'action d'une force, et est **caractérisé en ce que** la pièce est exposée à une contrainte de traction le long du plan de rupture tour à tour sur la face supérieure et sur la face inférieure.

2. Procédé selon la revendication 1, **caractérisé en ce que** la contrainte de traction est générée par un mouvement de basculement à alternance périodique des paires de mâchoires de serrage (2, 3) l'une vers l'autre.

3. Procédé selon la revendication 2, **caractérisé en ce que** le mouvement de basculement à alternance périodique des paires de mâchoires de serrage se superpose à une force de traction qui écarte la paire de mâchoires (2, 3) essentiellement perpendiculairement au plan de rupture (12).

4. Procédé selon la revendication 2, **caractérisé en ce que** la contrainte alternée de flexion générée par le mouvement de basculement à alternance périodique des paires de mâchoires de serrage (2, 3) dans la zone du plan de rupture (12) de la pièce est introduite de manière continuellement croissante.

5. Procédé selon la revendication 2, **caractérisé en ce que** la contrainte alternée de flexion générée par le mouvement de basculement à alternance périodique des paires de mâchoires de serrage (2, 3) dans la zone du plan de rupture de la pièce est introduite de façon pulsée.

6. Procédé selon la revendication 3, **caractérisé en ce que** la force de traction est augmentée en continu.

7. Procédé selon la revendication 3, **caractérisé en ce que** la force de traction est introduite de façon pulsée.

8. Procédé selon la revendication 1 ou 2, **caractérisé en ce que** la fréquence du mouvement est comprise entre 0,1 et 10 Hz.

9. Procédé selon la revendication 7, **caractérisé en ce que** la fréquence de la force de traction est comprise entre 0,1 et 10 Hz.

10. Procédé selon une ou plusieurs des revendications 1 à 9, **caractérisé en ce que** la force exercée pour le mouvement est générée hydrauliquement.

11. Procédé selon la revendication 3, 6, 7 ou 9, **caractérisé en ce que** la force de traction est générée hydrauliquement.

12. Procédé selon une ou plusieurs des revendications 1 à 5 ainsi que 8 et 10, **caractérisé en ce qu'**en vue de la génération du mouvement par rapport à une base fixe, une paire de mâchoires (2) est immobile et l'autre paire de mâchoires (3) est déplacée.

13. Procédé selon la revendication 1, **caractérisé en ce que** la pièce est munie d'une entaille de rupture sur la face supérieure et/ou sur la face inférieure au niveau du plan de rupture (12).

14. Procédé selon la revendication 13 pour diviser par rupture une pièce en forme de disque (4), **caractérisé en ce que** l'entaille de rupture forme un angle (α) avec le rayon.

15. Procédé selon la revendication 14, **caractérisé en ce que** l'angle (α) est compris entre 5° et 30°.

16. Procédé selon la revendication 13 ou 14, **caractérisé en ce que** l'entaille de rupture sur la face supérieure est décalée par rapport à l'entaille de rupture sur la face inférieure de la pièce (4).

17. Procédé selon la revendication 1, **caractérisé en ce que** les paires de mâchoires de serrage (2, 3) atteignent le plan de rupture avec leurs extrémités libres depuis des côtés opposés.

18. Procédé selon la revendication 17, **caractérisé en ce que** les entailles de rupture sont générées par des arêtes de coupe qui sont disposées dans la zone des extrémités libres des mâchoires d'une des deux paires de mâchoires (2, 3).

19. Procédé selon la revendication 18 pour diviser par rupture une pièce en forme de disque (4), **caractérisé en ce que** les arêtes de coupe forment un angle (α) avec le rayon de la pièce en forme de disque (4).

20. Procédé selon la revendication 19, **caractérisé en ce que** l'angle (α) est compris entre 5° et 30°.

21. Dispositif destiné à la mise en oeuvre du procédé selon une plusieurs des revendications précédentes 1 à 20, comportant
- une base (1),
- une première paire de mâchoires (2) montée de manière fixe sur la base (1),
- une seconde paire de mâchoires (3) agencée de manière mobile sur la base (1),
- un entraînement (6), au moyen duquel la seconde paire de mâchoires agencée de manière mobile peut aller et venir périodiquement, ainsi que
- une unité de commande, au moyen de laquelle le mouvement de va-et-vient de la seconde paire de mâchoires peut être réglé en fonction de la fréquence et de la force.

22. Dispositif selon la revendication 21, **caractérisé en ce que** l'entraînement (6) présente un groupe hydraulique avec au moins une pompe (11), au moins un ensemble de soupape (9) ainsi qu'au moins un vérin hydraulique (7, 8), qui agissent sur une ou deux paires de mâchoires.

23. Dispositif selon la revendication 22, **caractérisé en ce que** l'ensemble de soupape (9) présente une soupape hydraulique proportionnelle, une servosoupape ou une soupape de commande.

24. Dispositif selon la revendication 22 ou 23, **caractérisé en ce que** l'ensemble de soupape présente une soupape réductrice réglable (11).
